# EUROPÄISCHE PATENTSCHRIFT

(11) **EP 0 869 217 B1**
(45) Veröffentlichungstag und Bekanntmachung des Hinweises auf die Patenterteilung: **12.11.2003**
(21) Anmeldenummer: 97107758.1
(22) Anmeldetag: 13.05.1997
(51) Int. Cl.: B29C 70/88, H05F 3/02

(54) **Verfahren zur Herstellung von hochverdichtetem leitfähigem Belagsmaterial**
Process for preparing a high density conductive surface material
Procédé de fabrication d'un matériau de revêtement conducteur à haute densité

(30) Priorität: 01.04.1997 CH 75497
(43) Veröffentlichungstag der Anmeldung: 07.10.1998
(73) Patentinhaber: FORBO-GIUBIASCO SA, 6512 Giubiasco (CH)
(72) Erfinder: Carraro, Guido, 6500 Bellinzona (CH); Manso, Elvio, 6512 Giubiasco (CH)
(74) Vertreter: Patentanwälte Schaad, Balass, Menzl & Partner AG

(56) Entgegenhaltungen:
- EP-A- 0 479 053
- EP-A- 0 554 546
- WO-A-85/00723

## Beschreibung

Die Erfindung betrifft ein Verfahren zur Herstellung von hochverdichtetem leitfähigem Belagsmaterial nach dem Oberbegriff von Anspruch 1.

Hochverdichtete Belagsmaterialien aus thermoplastischem Kunststoff waren die Antwort der Industrie auf die spitzen Absätze der Damen in den Fünfzigerjahren. Die spitzen Absätze haben praktisch auf jeder Unterlage irreversible Spuren hinterlassen. Deshalb hat die Industrie Belagsmaterialien, insbesondere Bodenbeläge, entwickelt, die durch Verpressen von thermoplastischen Kunststoffen bei erhöhter Temperatur 160-180°C und hohem Druck (30 bis 50 bar) hergestellt, hoher Druckbelastung widerstehen können. Diese hochverdichteten Belagsmaterialien eignen sich auch sehr gut als Bodenbeläge für Laboratorien und Industrieräume. Insbesondere in Laboratorien und EDV-Räumen ist jedoch die statische Aufladung, die mit Kunststoffbelägen einhergeht, unerwünscht. Deshalb müssen die Bodenbeläge leitend ausgebildet sein. Praktisch bedeutet dies, dass der Durchgangswiderstand, der mit standardisierten Methoden wie beispielsweise nach DIN 51 953 gemessen wird, vorgegebene Werte nicht überschreiten darf.

Um die leitfähigen hochverdichteten Belagsmaterialien gemäss dem Stand der Technik herzustellen, werden die Teilchen aus thermoplastischem Kunststoff, meistens sogenannten Chips oder Schnitzel, vor dem Verpressen mit einem leitfähigen Überzug versehen. Beim Verpressen bei erhöhter Temperatur werden die Kunststoffteilchen zusammen mit dem leitfähigen Überzug stark verformt und ergeben einen homogenen Block, der von gleichmässig verteilten dünnen leitfähigen Schichten durchgesetzt ist. Aus diesem Block werden dann mehrere Einzelplatten geschnitten. Die Gesamtleitfähigkeit der Einzelplatte ist abhängig von der Menge der darin verteilten leitfähigen Substanz. Ausser dem obigen üblicherweise angewendeten chargenweisen Verpressen sind auch Verfahren zum kontinuierlichen Herstellen von hochverdichtetem Belagsmaterial, z.B. in EP-B 0 479 053, beschrieben, bekannt.

Je nach Einsatzort wird eine unterschiedliche Leitfähigkeit des Belagsmaterials gewünscht. Das Problem der unterschiedlichen Leitfähigkeit wurde bisher durch den Einsatz unterschiedlicher auf die jeweilige Bestellung abgestimmter Menge oder Konzentration des auf die Kunststoffteilchen vor dem Verpressen aufgebrachten leitfähigen Überzuges gelöst. Diese Vorgehensweise hatte verschiedene Nachteile. Mit dem Aufbringen des leitfähigen Überzuges auf die Kunststoffteilchen konnte erst nach Vorliegen der konkreten spezifizierten Bestellung begonnen werden. Erst danach konnten die Kunststoffteilchen verpresst werden. Entsprechend war eine kurzfristige Lieferung, was immer mehr gewünscht wird, nicht möglich. Ausserdem hat es sich gezeigt, dass sich unterschiedliche Mengen der Konzentrationen der leitfähigen Substanz im Belagsmaterial nicht analog verhalten. Bei höherer Konzentration der leitfähigen Substanz im Belagsmaterial, z.B. von ≥0.056%, können die gewünschten engen Toleranzen des Durchgangswiderstandes, des üblichen Masses der Leitfähigkeit, problemlos eingehalten werden. Bei der gleichen Arbeitsweise, jedoch niedrigerer Konzentration der leitfähigen Substanz im Belagsmaterial, z.B. von ≥0.04%, wird eine breitere Streuung der gemessenen Werte des Durchgangswiderstandes beobachtet. Dies führt bei niedriger Konzentration der leitfähigen Substanz häufiger zu Ausschussware mit den entsprechenden wirtschaftlichen Nachteilen.

Aufgabe der vorliegenden Erfindung ist es, ein Verfahren zur Herstellung von hochverdichtetem leitfähigem Belagsmaterial gemäss dem Oberbegriff von Anspruch 1 mit kontrolliertem Durchgangswiderstand auf technisch einfache und ökonomische Weise vorzuschlagen.

Insbesondere soll ein hochverdichtetes leitfähiges Belagsmaterial geschaffen werden, das auch bei höheren Durchgangswiderständen eine enge Messwertverteilung für den Durchgangswiderstand aufweist.

Die gestellte Aufgabe wird durch die Merkmale des kennzeichnenden Teils von Anspruch 1 gelöst. Besonders bevorzugte Ausführungsformen der Erfindung bilden den Gegenstand der abhängigen Ansprüche 2 bis 7.

Als Folge des Aufbringens der leitfähigen Muster auf die auf einer Unterlage zu liegen kommende untere Fläche des Belagsmaterials bestimmen die elektrischen Kontaktpunkte, d.h. die Stellen, wo die erste leitfähige Substanz an der unteren Fläche des Belagsmaterials in Erscheinung tritt, dessen Leitfähigkeit, d.h. den Durchgangswiderstand, nicht mehr allein, sondern er wird zusätzlich und wesentlich durch die leitfähigen Muster auf der unteren Fläche des Belagsmaterials mitbestimmt. Dort, wo auf der unteren Fläche des Belagsmaterials keine leitfähige Zubereitung aufgedruckt ist, entspricht der Durchgangswiderstand dem Gehalt des Belagsmaterials an der ersten leitfähigen Substanz. An Stellen, wo die leitfähige Zubereitung, enthaltend die zweite leitfähige Substanz, aufgebracht ist, wird der Durchgangswiderstand durch die Konzentration der zweiten leitfähigen Substanz im Muster kontrolliert. Mithin hat bei der Herstellung von hochverdichtetem leitfähigem Belagsmaterial die Konzentration und Verteilung der ersten leitfähigen Substanz im Belagsmaterial, die bisher für den Durchgangswiderstand allein bestimmend war, nur noch eine sekundäre Rolle.

Durch das erfindungsgemässe Aufbringen des Musters auf die untere Fläche des Belagsmaterials können Bereiche mit erhöhtem Durchgangswiderstand geschaffen werden.

Als Folge der erfindungsgemässen Arbeitsweise, bei der der Durchgangswiderstand durch das leitfähige Muster an der unteren Fläche des Belagsmaterials kontrolliert wird, wird bevorzugt ein Grundtyp an Belagsmaterial mit einer höheren Konzentration an der ersten leitfähigen Substanz, z.B. 0.06% Russ, hergestellt. Als Folge der verhältnismässig hohen Konzentration an der ersten leitfähigen Substanz wird ein Belagsmaterial mit engen Toleranzen des Durchgangswiderstandes erhalten. Aus dem Grundtyp des Belagsmaterials wird dann durch Aufbringen eines geeigneten Musters und Konzentration der Zubereitung an der zweiten leitfähigen Substanz ein Belagsmaterial mit vorgegebenem niedrigem Durchgangswiderstand geschaffen. Das erfindungsgemässe Verfahren erlaubt damit, den zeit- und technologieaufwendigen Teil der Produktion im voraus auszuführen. Bei Eingang einer Bestellung wird dann die gewünschte Leitfähigkeit, d.h. der Durchgangswiderstand, durch Aufbringen des Musters der leitfähigen Zubereitung auf das Belagsmaterial eingestellt. Auf diese Weise kann der Grundtyp des Belagsmaterial zentral erzeugt und nach Versenden dezentral den jeweiligen Spezifikationen angepasst werden.

Durch Variieren des Musters kann der Durchgangswiderstand entsprechend variiert werden. Bevorzugt werden regelmässige, insbesondere netzartige Muster. Das Aufbringen der Muster erfolgt zweckmässigerweise mit einem Druckverfahren, wie beispielsweise Offset-, Flexo- und Siebdruck. Als erste und zweite leitfähige Substanz gemäss der Erfindung kann dieselbe Substanz, beispielsweise Russ, eingesetzt werden. Andere geeignete leitfähige Substanzen sind Metallpulver und leitfähige organische Substanzen.

Ein weiterer Vorteil der Erfindung ist die Zuverlässigkeit der Leitkontakte mit der üblicherweise das Belagsmaterial an die Unterlage bindenden Klebstoffschicht. Der hierfür eingesetzte Klebstoff enthält leitfähige Substanzen. Früher war dies Russ; heute handelt es sich mehrheitlich um Kohlefasern. Bei letzteren besteht ein Verteilungsproblem, wodurch grössere Durchgangswiderstände als gewünscht entstehen können. Mit der erfindungsgemäss aufgebrachten leitfähigen Zubereitung liegen zusammenhängende Leitkontaktflächen vor, wodurch allfällige Verteilungsprobleme der Kohlefaseren eliminiert werden. Bei den heute mehrheitlich verwendeten wässrigen Dispersionsklebstoffen bildet sich während der offenen Zeit eine Oberflächenhaut, welche das homogene Verteilen des Klebstoffes beim Einlegen des Belagsmaterials (Flachdrücken der Klebstoffriefen) erschwert. Dadurch verringert sich die Anzahl der Kontaktpunkte resp. die gesamte Kontaktfläche bezgl. der leitfähigen Übergänge. Das erfindungsgemässe Netz vermag diese negative Erscheinung zu kompensieren. Mit anderen Worten, durch das erfindungsgemässe Belagsmaterial werden Fremdeinflüsse auf den Durchgangswiderstand minimiert. Dadurch kann auch mit kleinerem Klebstoffeinsatz gearbeitet werden. Ausserdem werden auch beim Verlegen des Belagsmaterials mit doppelseitigen, leitfähigen Klebebändern der gewünschte Durchgangswiderstand garantiert werden.

Die Reproduzierbarkeit des Wertes des Durchgangswiderstandes kann zusätzlich durch Verwendung einer acrylathaltigen Zubereitung beim Aufbringen des die erste leitfähige Substanz enthaltenden Überzuges auf den Kunststoffteilchen verbessert werden. Dieser neue Überzug erfordert keine Fixierzeit, so dass die Kunststoffteilchen sofort nach dem Trocknen weiterverarbeitet werden könnnen. Gleichzeitig wird eine bessere Haftung, z.B. von Russ, beobachtet, was zu einer besseren Reproduzierbarkeit des Durchgangswiderstandes des Belagsmaterials führt.

Die Erfindung wird anhand der nachfolgenden Figuren und Beispiele weiter veranschaulicht. Es zeigen rein schematisch:
- Fig. 1: die chargenweise Herstellung von hochverdichteten Belagsplatten;
- Fig. 2 bis 6: verschiedene Muster der leitfähigen Zubereitung auf der unteren Fläche des hochverdichteten Belagsmaterials.

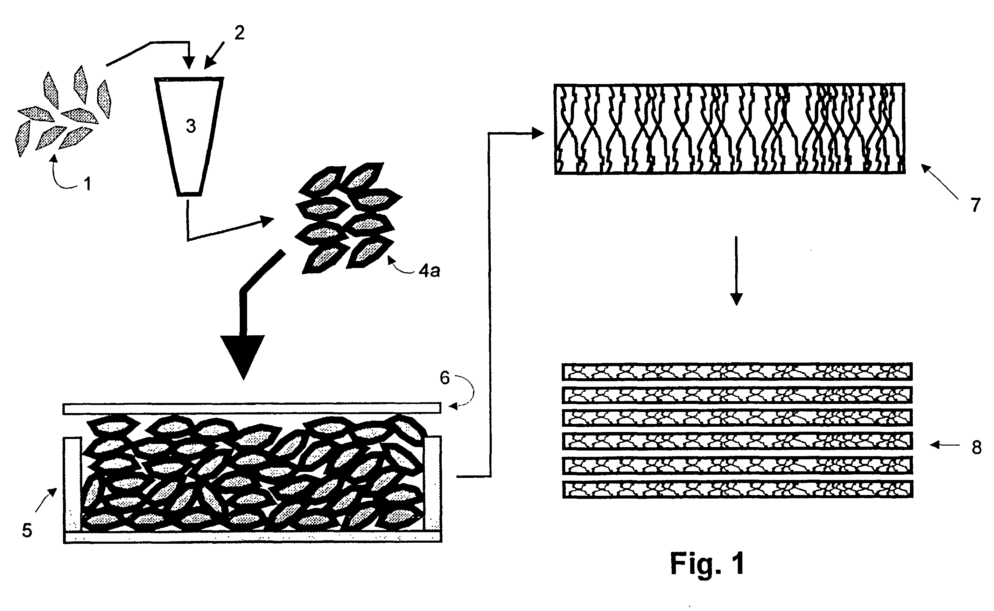

Die chargenweise Herstellung von hochverdichteten Belagsmaterialien erfolgt, wie in Fig. 1 dargestellt, durch Einbringen von Chips 1 und einer flüssigen Zubereitung 2, enthaltend die erste leitfähige Substanz, in eine Mischeinrichtung 3, wo die Chips 1 mit der flüssigen Zubereitung überzogen werden. Die mit einem leitfähigen Überzug versehenen Chips 4a werden in eine Pressform 5 eingefüllt und nach Verschliessen der Pressform mit einem Deckel 6 unter erhöhter Temperatur und Druck zu einem Block 7 verpresst. Der abgekühlte Block 7 wird in sechs Einzelplatten 8 gespaltet. Diese Einzelplatten können noch bearbeitet, z.B. geschliffen, werden.

Die fertigen Einzelplatten des hochverdichteten leitfähigen Belagsmaterials können sofort oder nach einer Zwischenlagerung an ihrer unteren Fläche, die auf einer Unterlage zu liegen bestimmt ist, mit dem vorbestimmten Muster einer Zubereitung, enthaltend die zweite leitfähige Substanz, versehen werden. Diese Zubereitung wird zweckmässigerweise mit einem Druckverfahren wie Offset-, Flexooder Siebdruck aufgebracht.

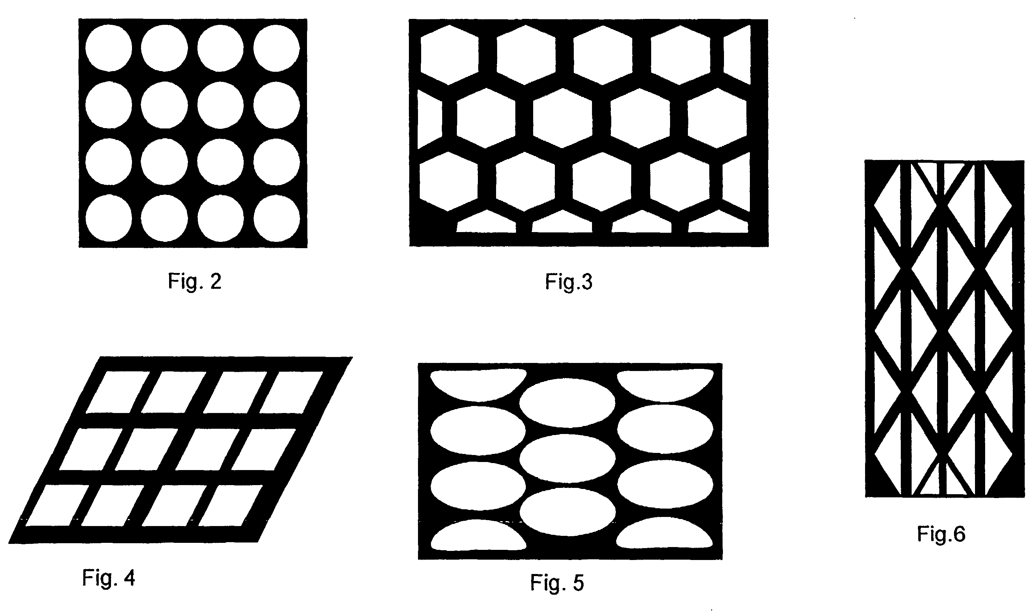

Die Figuren 2 bis 6 zeigen fünf geeignete regelmässige netzartige Muster zum Bedrucken der unteren Fläche des Belagsmaterials. Selbstverständlich sind andere Muster auch geeignet. Die Wahl der Muster, die Grösse der bedruckten Fläche und die Konzentration der leitfähigen Substanz in der Zubereitung kann nach Vorliegen der gewünschten Spezifikationen vom Fachmann durch Vorversuche ermittelt werden.

Die nachfolgenden Beispiele dienen zur weiteren Veranschaulichung der Erfindung:

### Beispiel 1

### Wirkung des Musters auf der unteren Fläche des Belagsmaterials:

a) Limiten der Durchgangswiderstandswerte von hochverdichteten leitfähigen Belagsmaterialien gemäss dem Stand der Technik.

| Bereich des Durchgangswiderstandes [Ω] | Geometrische Mittelwerte [Ω] | 95% Streubereich |
|---|---|---|
| 10⁴-10⁶ | 7x10⁴-10⁵ | 1-1.2 Dekaden |
| 10⁶-10⁸ | 7x10⁶-10⁷ | 1.9-2.1 Dekaden |

Diese Werte zeigen, dass der Streubereich bei höheren Werten des Durchgangswiderstandes, d.h. bei niedrigerer Konzentration der ersten leitfähigen Substanz (hier: Russ), deutlich grösser ist. Deshalb ist das Einhalten der erforderlichen Normgrenzen bei niedriger Konzentration der ersten leitfähigen Substanz erschwert.
b) Limiten des Durchgangswiderstandes nach Aufdrucken eines netzförmigen Musters einer Zubereitung, enthaltend 8.0 bzw. 1.5 Gew.-% von Russ als zweite leitfähige Substanz. Durch den niedrigeren Russgehalt im Muster wird der Durchgangswiderstand erniedrigt, d.h. es wird eine Wirkung wie mit niedrigerer Konzentration an der ersten leitfähigen Substanz im Belagsmaterial erzielt, jedoch mit bedeutend engerem Streubereich. Mithin können erfindungsgemäss hohe Durchgangswiderstände mit einem niedrigeren Streubereich erzielt und damit die erforderlichen Normgrenzen eingehalten werden.

| Russgehalt im Muster [%] | Geometrischer Mittelwert [Ω] | 95 % Streubereich |
|---|---|---|
| 8 | 7x10⁴ | 1.1 Dekaden |
| 2.7 | 4x10⁶ | 1.2 Dekaden |

### Beispiel 2

### Acrylathaltige Zubereitungen zum Versehen der Kunststoffteilchen mit einem Überzug enthaltend die erste leitfähige Substanz.

Die Leitfähigkeit wird vorzugsweise über die Zugabe von Russ gesteuert. Es können aber auch Metallpulver (z.B. Kupfer, Zink, Nickel) oder organische leitfähige Verbindungen wie Polyanilin eingesetzt werden.

### I. Beschichtungsrezepturen.

a. Vinyl-Acrylat-Dispersionen (VAD)

| **Komponenten** | **Gewichtsteile** | **ev. Provenienz** |
|---|---|---|
| Acrylatmodifizierte PVC Emulsion | 89.4 | Wacker-Chemie |
| Antischaummittel (Polysiloxan) | 0.2 | Byk-Chemie |
| Butyldiglikol | 3.0 | Chem. Fabrik Schweizerhall |
| N-Methylpirrolidon | 2.8 | Chem. Fabrik Schweizerhall |
| Aerosil | 1.8 | Degussa |
| Leitfähiger Russ | 2.8 | Akcro |

b. Zinkvernetzte Acrylat-Dispersionen

| **Komponenten** | **Gewichtsteile** | **ev. Provenienz** |
|---|---|---|
| Styrolmodif. Zn-venetzte | | |
| Acrylatdispersion | 59.0 | BASF |
| Antischaummittel (Polysiloxan) | 0.2 | Byk-Chemie |
| Wasser | 29.5 | |
| Aerosil | 9.5 | Degussa |
| Leitfähiger Russ | 1.8 | Akcro |

c. Urethan-Acrylat-Polymere mit Melamin-Formaldehyd-Crosslinker

| **Komponenten** | **Gewichtsteile** | **ev. Provenienz** |
|---|---|---|
| Urethanharz-Gemisch | 51.0 | Zeneca-Resins |
| Antischaummittel (Polysiloxan) | 0.3 | Byk-Chemie |
| Polyäthylen-Wachs-Emulsion | 4.0 | Christ-Chemie |
| Crosslinker auf Methoxymethyl- | | |
| Melamin-Basis | 3.5 | Dyno-Cytec |
| Aerosil | 9.0 | Degussa |
| Wasser | 30.2 | |
| Leitfähiger Russ | 2.0 | Akcro |

d. Urethan-Acrylat-Polymere mit reaktiven Epoxydgruppen, isocyanatfrei

| **Komponenten** | **Gewichtsteile** | **ev. Provenienz** |
|---|---|---|
| Urethanharz-Gemisch | 35.0 | Alberdingk Boley |
| Antischaummittel (Polysiloxan) | 0.2 | Byk-Chemie |
| Polyäthylen-Wachs-Emulsion | 4.0 | Christ-Chemie |
| Crosslinker auf Hexamethoxymethyl-Melamin-Basis | 6.0 | Dyno-Cytec |
| Aerosil | 5.2 | Degussa |
| Wasser | 47.0 | |
| Leitfähiger Russ | 2.6 | Akcro |

Diese Rezepturen a bis d ergeben im Belagsmaterial Durchgangswiderstände im Bereich 10⁴-10⁶ Ω. Für den höheren Bereich 10⁶-10⁸Ω wird der Russanteil generell um ca. 30% reduziert.

Die unterschiedlichen Russanteile in den Rezepturen für den gleichen Widerstandsbereich sind auf die von Polymer zu Polymer variierenden Isolationseigenschaften zurückzuführen.

### II. Russanteile die mit den obigen Rezepturen a bis d im Belagsmaterial erhalten wurden.

| | WiderstandsBereich | Russanteil i.d.Suspension [%] | Teile Suspension/100 Teile Chips | Russanteil i.d.Matrix [%] |
|---|---|---|---|---|
| a | 10⁴-10⁶ Ω | 2.8 | 2 | 0.056 |
| b | 10⁴-10⁶ Ω | 1.8 | 3.5 | 0.063 |
| c | 10⁴-10⁶ Ω | 2.0 | 2.0 | 0.040 |
| d | 10⁴-10⁶ Ω | 2.6 | 2 | 0.052 |
| | | | | |
| a | 10⁶-10⁸ Ω | 2.0 | 2 | 0.040 |

### Beispiel 3

### Druckzubereitung für das leitfähige Muster an der unteren Fläche des Belagsmaterials.

| | |
|---|---|
| Acrylat-Bindemittel | 19.0% |
| Russ | 8.0% |
| Propylenglykol | 7.5% |
| Verarbeitungshilfsmittel | 1.5% |
| Wasser | 64.0% |

## Patentansprüche

1. Verfahren zur Herstellung von hochverdichtetem leitfähigem Belagsmaterial aus thermoplastischem Kunststoff durch Versehen von Teilchen des thermoplastischen Kunststoffes mit einem eine erste leitfähige Substanz enthaltenden Überzug, Verpressen der Teilchen unter erhöhter Temperatur und hohem Druck zum hochverdichteten leitfähigen Belagsmaterial, enthaltend die erste leitfähige Substanz, **dadurch gekennzeichnet, dass** man auf die auf einer Unterlage zu liegen kommende untere Fläche des Belagsmaterials ein vorbestimmtes Muster einer Zubereitung, enthaltend eine zweite leitfähige Substanz, aufbringt und dadurch den Durchgangswiderstand in den mit dem Muster versehenen Bereichen kontrolliert.

2. Verfahren nach Anspruch 1, **dadurch gekennzeichnet, dass** man durch Aufbringen des Musters der Zubereitung, enthaltend die zweite leitfähige Substanz, Bereiche mit erhöhtem Durchgangswiderstand schafft.

3. Verfahren nach Anspruch 1, **dadurch gekennzeichnet, dass** man regelmässige Muster, vorzugsweise ein netzartiges Muster, der Zubereitung, enthaltend die zweite leitfähige Substanz, auf die untere Fläche des Belagsmaterials aufbringt.

4. Verfahren nach einem der vorangehenden Ansprüche, **dadurch gekennzeichnet, dass** man das Muster der Zubereitung, enthaltend die zweite leitfähige Substanz, mit einem Druckverfahren aufbringt.

5. Verfahren nach einem der vorangehenden Ansprüche, **dadurch gekennzeichnet, dass** man ein Grundtyp des Belagsmaterials mit einer einzigen Konzentration an der ersten leitfähigen Substanz herstellt und daraus durch Aufbringen von unterschiedlichen Mustern bzw. unterschiedlichen Konzentrationen der Zubereitung, enthaltend die zweite leitfähige Substanz, auf die untere Fläche des Belagsmaterials, Belagsmaterialien mit unterschiedlichen Durchgangswiderständen herstellt.

6. Verfahren nach einem der vorangehenden Ansprüche, **dadurch gekennzeichnet, dass** man als erste und als zweite leitfähige Substanz dieselbe Substanz, vorzugsweise Russ, verwendet.

7. Verfahren nach einem der vorangehenden Ansprüche, **dadurch gekennzeichnet, dass** man das hochverdichtete leitfähige Belagsmaterial durch Überziehen der Kunststoffteilchen mit einer acrylathaltigen Zubereitung, enthaltend die erste leitfähige Substanz, Trocknen des Überzuges und Verpressen der Teilchen herstellt.

## Claims

1. Process for producing highly compacted conductive covering material from a thermoplastic by coating the particles of the thermoplastic with a material comprising a first conductive substance, and compressing the particles at an elevated temperature and at high pressure to give the highly compacted conductive covering material comprising the first conductive substance, **characterized in that** a predetermined pattern of a preparation comprising a second conductive substance is applied to that lower surface of the covering material which will lie on a substrate, the volume resistance thus being controlled in the areas provided with the pattern.

2. Process according to Claim 1, **characterized in that** areas with increased volume resistance are created by applying the pattern of the preparation comprising the second conductive substance.

3. Process according to Claim 1, **characterized in that** regular patterns, preferably a network-like pattern, of the preparation comprising the second conductive substance are applied to the lower surface of the covering material.

4. Process according to any of the preceding claims, **characterized in that** the pattern of the preparation comprising the second conductive substance is applied using a printing process.

5. Process according to any of the preceding claims, **characterized in that** a standard variant of the covering material with a single concentration of the first conductive substance is produced, from which covering materials with various volume resistances are produced by applying various patterns or various concentrations of the preparation comprising the second conductive substance to the lower surface of the covering material.

6. Process according to any of the preceding claims, **characterized in that** the first and the second conductive substance used are the same substance, preferably carbon black.

7. Process according to any of the preceding claims, **characterized in that** the highly compacted conductive covering material is produced by coating the plastics particles with an acrylate-containing preparation comprising the first conductive substance, drying the coating and compressing the particles.

## Revendications

1. Procédé de production de matériau de revêtement conducteur à haute densité à base de matière plastique thermoplastique, où l'on munit des particules de la matière plastique thermoplastique d'un enrobage contenant une première substance conductrice, on presse les particules à température élevée et sous haute pression pour obtenir un matériau de revêtement conducteur à haute densité, contenant la première substance conductrice, **caractérisé en ce que** l'on applique sur la surface inférieure du matériau de revêtement destinée à venir reposer sur un substrat, un motif prédéterminé d'une préparation contenant une deuxième substance conductrice, et **en ce que** la résistance de conductibilité est ainsi contrôlée dans les zones munies du motif.

2. Procédé selon la revendication 1, **caractérisé en ce que** l'on crée, par l'application du motif de la préparation, contenant la deuxième substance conductrice, des zones à résistance de conductibilité accrue.

3. Procédé selon la revendication 1, **caractérisé en ce que** l'on applique, sur la surface inférieure du matériau de revêtement, des motifs réguliers, de préférence un motif en forme de réseau, de la préparation contenant la deuxième substance conductrice.

4. Procédé selon l'une des revendications qui précèdent, **caractérisé en ce que** l'on applique le motif de la préparation contenant la deuxième substance conductrice par un procédé d'impression.

5. Procédé selon l'une des revendications qui précèdent, **caractérisé en ce que** l'on prépare un type de base du matériau de revêtement avec une unique concentration de la première substance conductrice et qu'à partir de celui-ci on prépare, par application sur la surface inférieure du matériau de revêtement conducteur de différents motifs ou de différentes concentrations de la préparation contenant la deuxième substance conductrice, des matériaux de revêtement présentant différentes résistances de conductibilité.

6. Procédé selon l'une des revendications qui précèdent, **caractérisé en ce que** l'on utilise comme première et deuxième substance conductrice, la même substance, de préférence du noir de fumée.

7. Procédé selon l'une des revendications qui précèdent, **caractérisé en ce que** l'on prépare le matériau de revêtement à haute densité par enrobage des particules de matière plastique au moyen d'une préparation contenant un acrylate, contenant la première substance conductrice, séchage de l'enrobage et pressage des particules.
